# EUROPEAN PATENT APPLICATION

(11) **EP 4 383 174 A1**
(43) Date of publication of application: **12.06.2024**
(21) Application number: 23195369.6
(22) Date of filing: 05.09.2023
(51) Int. Cl.: G06Q 20/38, H04L 9/00

(54) **BLOCKCHAIN MANAGEMENT PROGRAM, BLOCKCHAIN MANAGEMENT DEVICE, AND BLOCKCHAIN MANAGEMENT METHOD**

(30) Priority: 05.12.2022 JP 2022194446
(71) Applicant: FUJITSU LIMITED, Kawasaki-shi, Kanagawa 211-8588 (JP)
(72) Inventor: Oka, Tatsuya, Kawasaki-shi, Kanagawa, 211-8588 (JP); Yamaoka, Yuji, Kawasaki-shi, Kanagawa, 211-8588 (JP)
(74) Representative: Hoffmann Eitle

(57) **Abstract**

A blockchain management program causes a computer to execute a process including: identifying a specific group that includes a subject device among a plurality of groups that each includes a plurality of devices that holds a ledger, based on identification information that corresponds to the subject device, in a mining process to generate a block from a newly generated transaction and store the block as part of the ledger; determining whether a group that corresponds to a past block selected during the mining process is the specific group; and determining an incentive for success in the mining process to be a first incentive when the group that corresponds to the past block is determined to be a group other than the specific group, and determining an incentive for success in the mining process to be a second incentive that is a sum of the first incentive and an additional incentive when the group that corresponds to the past block is determined to be the specific group.

## Description

### FIELD

The embodiment discussed herein is related to a blockchain management program, a blockchain management device, and a blockchain management method.

### BACKGROUND

Blockchains that manage a ledger in a shared manner among a plurality of nodes accessing a peer-to-peer (P2P) network have recently appeared.

In such a blockchain, each node of the plurality of nodes performs, for example, a process (hereinafter also referred to as the verification process) to verify the contents of a transaction of a business record or the like (hereinafter also referred to simply as a transaction). Each node of the plurality of nodes then generates a block by, for example, collecting one or more transactions after the verification process is performed, and performs a process for satisfying a predetermined condition requisite for adding the generated block to the existing block in the ledger (this process will be hereinafter also referred to as the mining process). After that, the node that has succeeded in the mining process (this node will be hereinafter also referred to simply as the mining success node) among the plurality of nodes stores, as part of the ledger, the block for which the mining process has been successfully performed, for example, and then transmits the block to the other nodes of the plurality of nodes (the other nodes of the plurality of nodes will be hereinafter referred to simply as the other nodes). By doing so, the mining success node performs a process of equalizing the contents of the blocks among the plurality of nodes (this process will be hereinafter also referred to as the consensus building process).

Further, in such a blockchain as described above, for example, an incentive is given to the mining success node.

International Publication Pamphlet No. WO 2019/038839, Japanese National Publication of International Patent Application No. 2022-533770, and U.S. Patent Application Publication No. 2019/0237169 are disclosed as related art.

### SUMMARY

### TECHNICAL PROBLEM

Here, such a mining process as described above is performed, for example, in accordance with a consensus algorithm using blocks stored as part of the ledger in the past (these blocks will be hereinafter also referred to as past blocks) in some cases. Therefore, each node of the plurality of nodes as described above needs to hold as many past blocks as possible, because of the need to perform the mining process, for example.

However, in a case where the total data size of the held past blocks is large, for example, in each node of the plurality of nodes, some of the past blocks are deleted in some cases. Therefore, in such a blockchain as described above, there is a possibility that a block to be deleted from all the nodes (a block not held in any node) will appear, for example.

Therefore, in one aspect, an embodiment aims to provide a blockchain management program, a blockchain management device, and a blockchain management method that enable a reduction of the appearance of a block to be deleted from all the nodes.

According to an aspect of the embodiments, a blockchain management program causes a computer to execute a process including: identifying a specific group that includes a subject device among a plurality of groups that each includes a plurality of devices that holds a ledger, based on identification information that corresponds to the subject device, in a mining process to generate a block from a newly generated transaction and store the block as part of the ledger; determining whether a group that corresponds to a past block selected during the mining process is the specific group; and determining an incentive for success in the mining process to be a first incentive when the group that corresponds to the past block is determined to be a group other than the specific group, and determining an incentive for success in the mining process to be a second incentive that is a sum of the first incentive and an additional incentive when the group that corresponds to the past block is determined to be the specific group.

### ADVANTAGEOUS EFFECTS OF INVENTION

According to one aspect, it is possible to reduce the appearance of a block to be deleted from all the nodes.

### BRIEF DESCRIPTION OF DRAWINGS

FIG. 1 is a diagram for explaining the configuration of an information processing system 10;
FIG. 2 is a diagram for explaining the hardware configuration of a node 1;
FIG. 3 is a diagram for explaining the functions of a node 1 according to a first embodiment;
FIG. 4 is a flowchart for explaining an outline of a blockchain management process according to the first embodiment;
FIG. 5 is a diagram for explaining a specific example of the blockchain management process according to the first embodiment;
FIGs. 6A and 6B are diagrams for explaining a specific example of the blockchain management process according to the first embodiment;
FIG. 7 is a flowchart for explaining details of the blockchain management process according to the first embodiment;
FIG. 8 is a flowchart for explaining details of the blockchain management process according to the first embodiment;
FIG. 9 is a flowchart for explaining details of the blockchain management process according to the first embodiment;
FIG. 10 is a flowchart for explaining details of the blockchain management process according to the first embodiment;
FIG. 11 is a table for explaining a specific example of group information 131;
FIG. 12 is a table for explaining a specific example of base reward information 132;
FIG. 13 is a table for explaining a specific example of additional reward information 133;
FIG. 14 is a table for explaining a specific example of the additional reward information 133;
FIG. 15 is a table for explaining a specific example of the additional reward information 133; and
FIG. 16 is a table for explaining a specific example of the additional reward information 133.

### DESCRIPTION OF EMBODIMENTS

### [Configuration of an Information Processing System According to a First Embodiment]

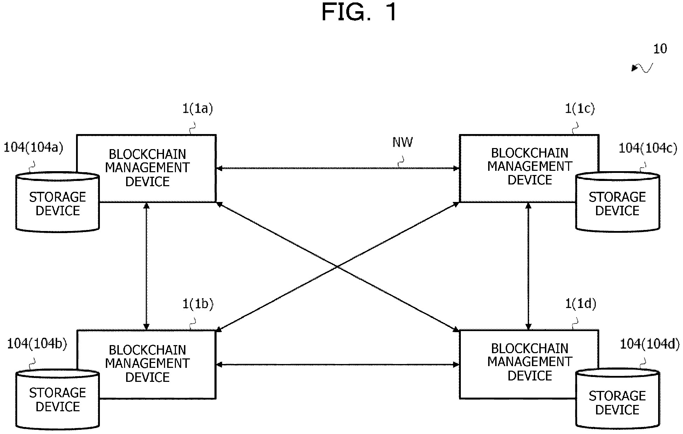

First, the configuration of an information processing system 10 is described. FIG. 1 is a diagram for explaining the configuration of the information processing system 10. In the description below, an explanation is made on the assumption that the consensus algorithm is Proof of Access (PoA).

The information processing system 10 illustrated in FIG. 1 includes, for example, a node 1a (hereinafter also referred to as the blockchain management device 1a), a node 1b (hereinafter also referred to as the blockchain management device 1b), a node 1c (hereinafter also referred to as the blockchain management device 1c), and a node 1d (hereinafter also referred to as the blockchain management device 1d). The node 1a, the node 1b, the node 1c, and the node 1d are coupled to each other via a network NW such as the Internet, for example. Note that the node 1a, the node 1b, the node 1c, and the node 1d will be hereinafter also collectively referred to simply as the nodes 1 or the blockchain management devices 1. Further, a case where the information processing system 10 includes four nodes 1 is described below, but the information processing system 10 may include less than or more than four nodes 1, for example.

Here, the node 1a is one or more virtual machines or physical machines, for example, and includes a storage device 104a that stores each block. Also, the node 1b is, for example, one or more virtual machines or physical machines, and includes a storage device 104b that stores each block. Likewise, the node 1c is, for example, one or more virtual machines or physical machines, and includes a storage device 104c that stores each block. Further, the node 1d is, for example, one or more virtual machines or physical machines, and includes a storage device 104d that stores each block. Hereinafter, the storage device 104a, the storage device 104b, the storage device 104c, and the storage device 104d will be also collectively referred to simply as the storage devices 104.

Specifically, for example, when receiving one or more transactions issued by a transaction issuer (hereinafter also referred to simply as the issuer) of the transaction, each node 1 of the plurality of nodes 1 performs a verification process to verify the contents of the received one or more transactions. Each node of the plurality of nodes 1 then generates a block by, for example, collecting one or more transactions after the verification process is performed, and performs a mining process for satisfying a condition requisite for adding the generated block to the existing block in the ledger. After that, the mining success node 1, which has succeeded in mining among the plurality of nodes 1, stores the block, for which the mining process has been successfully performed, as part of the ledger into the storage device 104, for example, and then transmits the block to the other nodes 1 among the plurality of nodes 1. By doing so, the mining success node 1 performs a consensus building process to equalize the contents of the block, for which the mining success node 1 has successfully performed the mining process, among the plurality of nodes 1.

Further, in the information processing system 10, an incentive for the success in the mining process (this incentive will be hereinafter also referred to as the first incentive or the base reward) is given to the operator (the miner) who has succeeded in the mining process at the mining success node 1, for example.

Here, such a mining process as described above is performed, for example, in accordance with a consensus algorithm using past blocks stored in the storage device 104 in the past, in some cases. Therefore, each node of the plurality of nodes 1 as described above needs to hold as many past blocks as possible, because of the need to perform the mining process, for example.

However, in a case where the total data size of the held past blocks is large, for example, in each node of the plurality of nodes 1, some of the past blocks stored in the storage device 104 corresponding to each node 1 are deleted in some cases. Therefore, in the information processing system 10 as described above, there is a possibility that a block might be deleted from all the nodes 1, for example. In this case, a past block to be used in a certain mining process might not exist in any of the nodes 1. As a result, the consensus algorithm stops functioning, and any new block can no longer be stored.

In view of the above, in a mining process to generate a block from a newly generated transaction and store the block as a part of a ledger, a node 1 according to this embodiment identifies the group including the subject node 1 (this group will be hereinafter also referred to as the specific group) among a plurality of groups each including a plurality of nodes 1 holding the ledger, based on identification information (for example, the hash value of a public key of the subject node 1) corresponding to the subject node 1.

The node 1 then determines, for example, whether the group corresponding to the past block selected during the mining process among the plurality of groups is the specific group.

In a case where it is determined, as a result, that the group corresponding to the past block is a group other than the specific group, the mining success node 1, which has succeeded in the mining process, determines the incentive for the success in the mining process to be the first incentive, for example.

In a case where the group corresponding to the past block is determined to be the specific group, on the other hand, the mining success node 1 determines, for example, the incentive for the success in the mining process to be an incentive (hereinafter also referred to as the second incentive) calculated by adding the first incentive and an additional incentive (hereinafter also referred to as the additional reward).

In other words, in the information processing system 10 according to this embodiment, in a case where the group corresponding to the past block used during the mining process is the specific group, for example, the incentive for the success in the mining process is made larger than in a case where the group corresponding to the past block used during the mining process is a group other than the specific group.

With this arrangement, in the information processing system 10 according to this embodiment, for example, the respective nodes of the plurality of nodes 1 can be made to hold the past blocks corresponding to the same groups as the respective nodes 1 as long as possible. In other words, by grouping the plurality of nodes 1 so that all the past blocks are associated with one of the groups, for example, the information processing system 10 can create a situation in which all the past blocks can be preferentially held in the respective nodes 1 corresponding to one of the groups. Thus, the information processing system 10 can reduce the appearance of a past block to be deleted from all the nodes 1, for example.

### [Hardware Configuration of a Node]

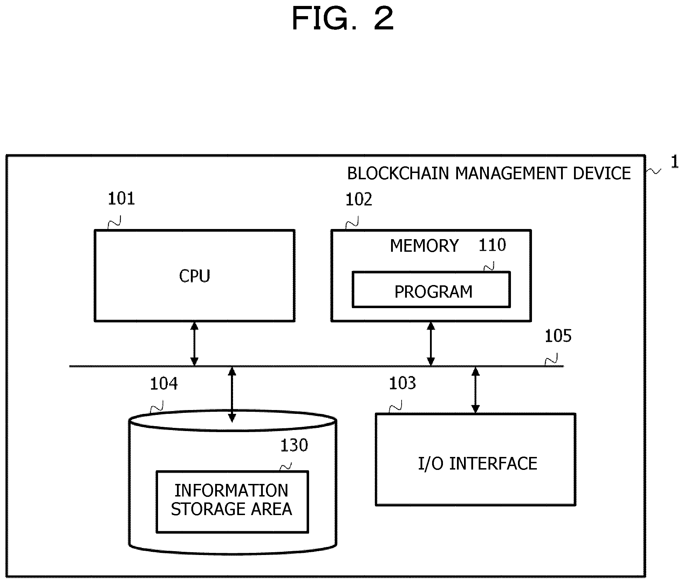

Next, the hardware configuration of each node 1 is described. FIG. 2 is a diagram for explaining the hardware configuration of a node 1.

As illustrated in FIG. 2, the node 1 includes, for example, a central processing unit (CPU) 101 as a processor, a memory 102, a communication device (I/O interface) 103, and a storage device 104. The respective components are coupled to each other via a bus 105.

The storage device 104 includes, for example, a program storage area (not illustrated) that stores a program 110 for performing a process (hereinafter also referred to as the blockchain management process) for determining an incentive for a successful mining process. The storage device 104 also includes, for example, a storage unit 130 (hereinafter, also referred to as the information storage area 130) that stores information to be used when the blockchain management process is performed. Note that the storage device 104 may be a hard disk drive (HDD) or a solid state drive (SSD), for example.

The CPU 101 executes the program 110 loaded from the storage device 104 into the memory 102, for example, and performs the blockchain management process.

Furthermore, the communication device 103 communicates with the other nodes 1 via the network NW, for example.

### [Functions of a Node According to the First Embodiment]

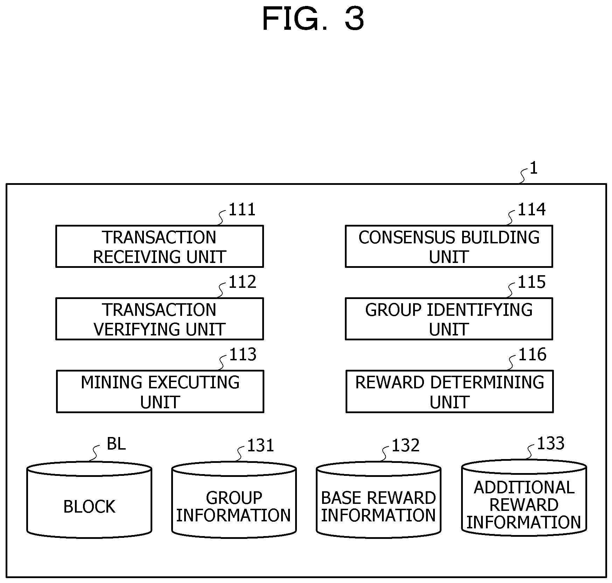

Next, the functions of each node 1 according to the first embodiment are described. FIG. 3 is a diagram for explaining the functions of a node 1 according to the first embodiment.

As the hardware such as the CPU 101 and the memory 102 organically cooperates with the program 110, for example, the node 1 achieves various functions including a transaction receiving unit 111, a transaction verifying unit 112, a mining executing unit 113, a consensus building unit 114, a group identifying unit 115, and a reward determining unit 116, as illustrated in FIG. 3.

Also, as illustrated in FIG. 3, the information storage area 130 stores a block BL (a past block BL), group information 131, base reward information 132, and additional reward information 133, for example.

The transaction receiving unit 111 receives, for example, one or more transactions issued by the issuer.

For example, the transaction verifying unit 112 performs a verification process to verify whether the contents of the one or more transactions received by the transaction receiving unit 111 are valid.

For example, the mining executing unit 113 generates a block BL including the one or more transactions verified by the transaction verifying unit 112, and performs a mining process for satisfying a predetermined condition requisite for adding the generated block to the existing block in the ledger.

Specifically, in a case where the consensus algorithm is PoA, for example, the mining executing unit 113 repeats hash value calculation using a randomly selected past block BL, and attempts to calculate a hash value that is equal to or smaller than a predetermined threshold. In other words, in this case, for example, the node 1 can perform the mining process only in a case where the randomly selected past block BL is held in the storage device 104 corresponding to the subject node 1.

After the block BL on which the mining process has been successfully performed by the mining executing unit 113 is stored as part of the ledger into the storage device 104, for example, the consensus building unit 114 transmits the block BL to the other nodes 1 among the plurality of nodes 1, to perform a consensus building process to make the contents of the block BL identical among the plurality of nodes 1.

For example, in a case where the subject node 1 is a mining success node 1, which is a case where the mining executing unit 113 of the subject node 1 has succeeded in the mining process, the group identifying unit 115 identifies a specific group including the subject node 1 among a plurality of groups including the respective nodes of the plurality of nodes 1, based on identification information corresponding to the subject node 1.

The reward determining unit 116 determines, for example, whether the group corresponding to the past block BL selected when the mining executing unit 113 performed the mining process among the plurality of groups is the specific group identified by the group identifying unit 115.

In a case where it is determined, as a result, that the group corresponding to the past block BL selected when the mining executing unit 113 performed the mining process is a group other than the specific group, the reward determining unit 116 determines, for example, the incentive for the success in the mining process to be a first incentive.

In a case where the group corresponding to the past block BL selected when the mining executing unit 113 performed the mining process is determined to be the specific group, on the other hand, the reward determining unit 116 determines, for example, the incentive for the success in the mining process to be a second incentive calculated by adding the first incentive and an additional incentive.

Note that a block BL received from another node 1 (a block BL for which another node 1 has succeeded in the mining process) may be stored into the storage device 104 (the information storage area 130), for example, like the block BL for which the subject node 1 has succeeded in the mining process. The group information 131, the base reward information 132, and the additional reward information 133 will be described later.

### [Outline of the Blockchain Management Process According to the First Embodiment]

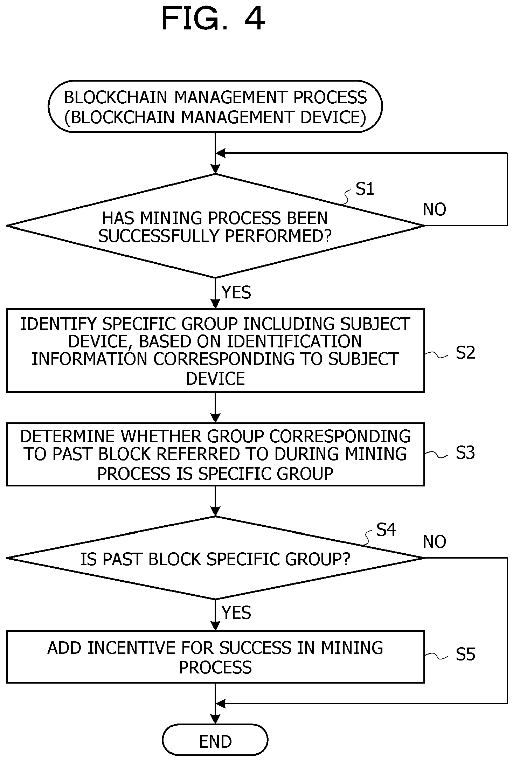

Next, an outline of the first embodiment is described. FIG. 4 is a flowchart for explaining an outline of the blockchain management process according to the first embodiment.

As illustrated in FIG. 4, for example, the node 1 waits until the mining process to generate a block BL from a newly generated transaction and store the block BL as part of the ledger is successfully performed (NO in S1).

As a result, if the mining process has been successfully performed (YES in S1), the node 1 identifies the specific group including the subject node 1 from among the plurality of groups including the respective nodes of the plurality of nodes 1, for example, based on the identification information corresponding to the subject node 1 (S2).

The node 1 (the mining success node 1) then determines, for example, whether the group corresponding to the past block BL referred to during the mining process among the plurality of groups is the specific group (S3).

As a result, if the group corresponding to the past block BL is determined to be the specific group (YES in S4), the node 1 (the mining success node 1) determines, for example, the incentive for the success in the mining process to be the second incentive calculated by adding the first incentive and an additional incentive (S5).

If the group corresponding to the past block BL is determined to be a group other than the specific group (NO in S4), on the other hand, the node 1 (the mining success node 1) does not perform the process in S5, for example. Specifically, in this case, the node 1 determines the incentive for the success in the mining process to be the first incentive, for example.

With this arrangement, in the information processing system 10 according to this embodiment, for example, the respective nodes of the plurality of nodes 1 can be made to hold the past blocks corresponding to the same groups as the respective nodes 1 as long as possible. Thus, the information processing system 10 can reduce the appearance of a past block to be deleted from all the nodes 1, for example.

Note that, among the procedures illustrated in FIG. 4, for example, the procedures illustrated in S2 and S3 may be carried out at the stage of starting the mining process (before S1). In this manner, the node 1 can participate in the mining process only in a case where the group corresponding to the past block BL referred to during the mining process is the specific group. In other words, it is also possible to select and participate in a mining process with a high reward.

### [Specific Example of the Blockchain Management Process According to the First Embodiment]

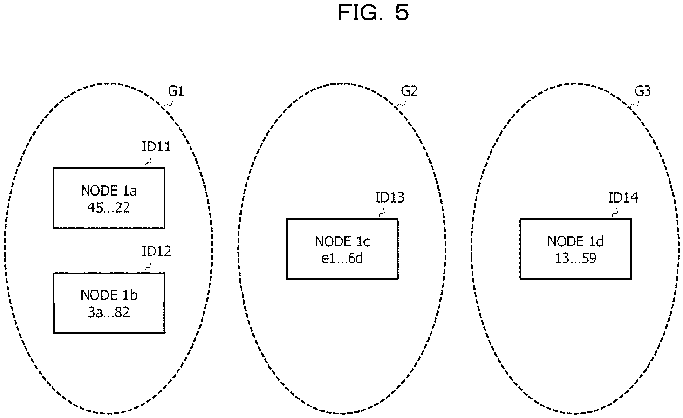

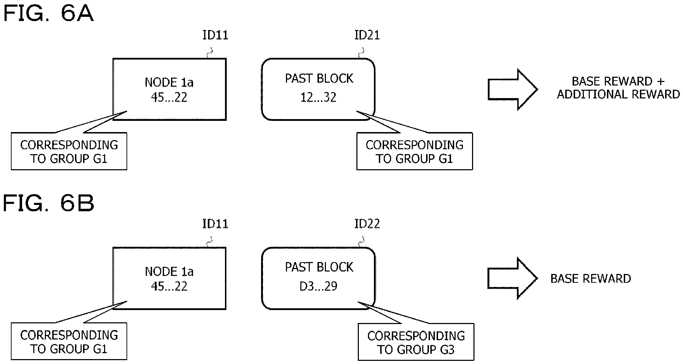

Next, a specific example of the blockchain management process according to the first embodiment is described. FIG. 5 and FIGs. 6A and 6B are diagrams for explaining a specific example of the blockchain management process according to the first embodiment. Note that the description below concerns a case where the respective nodes of the plurality of nodes 1 are classified into 16 groups, depending on which one of "1", "2", "3", "4", "5", "6", "7", "8", "9", "a", "b", "c", "d", °e", and "f" the last digit of the identification information about each node of the plurality of nodes 1 is.

Specifically, in the example illustrated in FIG. 5, the identification information ID11 corresponding to the node 1a is "45 ... 22", the identification information ID12 corresponding to the node 1b is "3a ... 82", the identification information ID13 corresponding to the node 1c is °e1 ... 6d", and the identification information ID14 corresponding to the node 1d is "13 ... 59".

Accordingly, as illustrated in FIG. 5, the node 1a corresponding to the identification information ID11 in which the last digit is 2, and the node 1b corresponding to the identification information ID12 are included in a group G1 formed with the nodes 1 corresponding to identification information in which the last digit is 2, for example. Meanwhile, the node 1c corresponding to the identification information ID13 in which the last digit is d is included in, for example, a group G2 (a group different from the group G1) formed with the nodes 1 corresponding to identification information in which the last digit is d. Further, the node 1d corresponding to the identification information ID14 in which the last digit is 9 is included in, for example, a group G3 (a group different from the group G1 and the group G2) formed with the nodes 1 corresponding to identification information in which the last digit is 9.

Further, for example, in a case where the node 1a becomes a mining success node 1 (a case where the node 1a has succeeded in the mining process), the node 1a identifies 2, which is the last digit of the identification information ID11 corresponding to the subject node 1. After that, as illustrated in FIGs. 6A and 6B, for example, the node 1a identifies the group G1 corresponding to the identification information in which the last digit is 2 as the group corresponding to the subject node 1 (S2).

Further, the example illustrated in FIG. 6A indicates that the identification information ID21 corresponding to the past block BL used during the mining process successfully performed at the node 1a is "12 ... 32". Accordingly, in this case, the node 1a identifies, for example, the group G1 corresponding to the identification information in which the last digit is 2 as the group corresponding to the past block BL used during the mining process successfully performed at the node 1a (S3).

Further, in this case, the group G1 corresponding to the past block BL used during the mining process successfully performed at the node 1a is the same as the group G1 identified as the group corresponding to the node 1a. Accordingly, in this case, the node 1a determines, for example, the incentive for the success in the mining process to be the second incentive (the sum of the first incentive and an additional incentive) (YES in S4 and S5).

Meanwhile, the example illustrated in FIG. 6B indicates that the identification information ID22 corresponding to the past block BL used during the mining process successfully performed at the node 1a is "D3 ... 29". Accordingly, in this case, the node 1a identifies, for example, the group G3 corresponding to the identification information in which the last digit is 9 as the group corresponding to the past block BL used during the mining process successfully performed at the node 1a (S3).

Further, in this case, the group G3 corresponding to the past block BL used during the mining process successfully performed at the node 1a is different from the group G1 identified as the group corresponding to the node 1a. Accordingly, in this case, the node 1a determines the incentive for the success in the mining process to be the first incentive, for example (NO in S4).

With this arrangement, in the information processing system 10 according to this embodiment, the numbers of nodes 1 included in the respective groups can be equalized, for example. Thus, the information processing system 10 can further reduce the appearance of past blocks BL to be deleted from all the nodes 1, for example.

Note that, in the process in S3, each node 1 may use, for example, a hash value calculated from the entire information included in each past block BL, a hash value included as information in each past block BL, or the block height corresponding to each past block BL as the identification information corresponding to each past block BL.

### [Details of the Blockchain Management Process According to the First Embodiment]

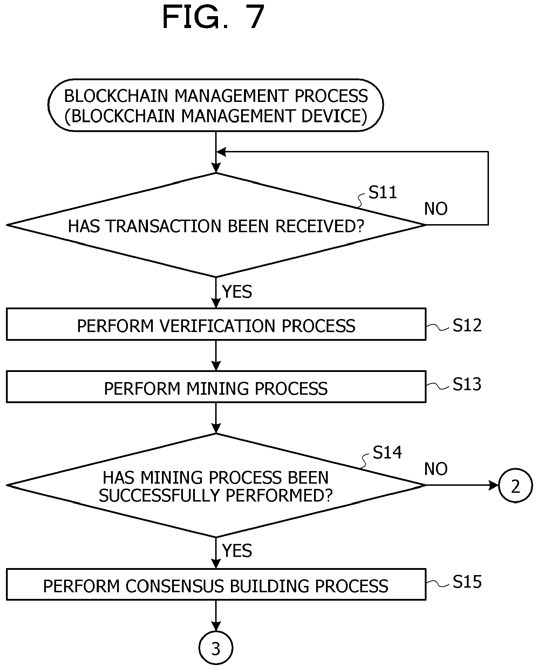

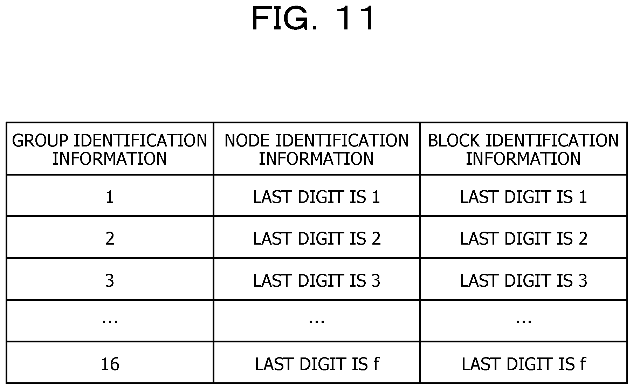

Next, details of the blockchain management process according to the first embodiment are described. FIGs. 7 to 10 are flowcharts for explaining the details of the blockchain management process according to the first embodiment. Further, FIGs. 11 to 16 are tables for explaining the details of the blockchain management process according to the first embodiment.

### [Main Process in the Blockchain Management Process]

First, the main process in the blockchain management process is described. FIGs. 7 to 9 are flowcharts for explaining the main process in the blockchain management process according to the first embodiment.

As illustrated in FIG. 7, the transaction receiving unit 111 stands by until receiving, for example, one or more transactions issued by the issuer (NO in S11).

If one or more transactions have been received (YES in S11), the transaction verifying unit 112 then performs a verification process to verify the contents of the one or more transactions received in the process in S11, for example (S12).

Subsequently, the mining executing unit 113 collects, for example, the one or more transactions verified in the process in S12, to generate a block BL (S13).

Specifically, the mining executing unit 113 generates a block BL including a hash value generated from the one or more transactions verified in the process in S12, a hash value generated from the previous block (the latest block) in the blockchain, a hash value of a public key of the subject node 1, and the like, for example, in addition to the one or more transactions verified in the process in S12.

Further, the mining executing unit 113 performs, for example, the mining process on the generated block BL (S13).

Specifically, in a case where the consensus algorithm is PoA, for example, the mining executing unit 113 repeats hash value calculation using a randomly selected past block BL, and attempts to calculate a value that is equal to or smaller than a predetermined threshold.

As a result, if the mining process on the block BL has been successfully performed in the process in S13 (YES in S14), for example, the consensus building unit 114 performs a consensus building process on the block BL on which the mining process has been successfully performed in the process in S13 (S15).

Specifically, after the block BL subjected to the mining process in the process in S13 is stored as part of the ledger into the storage device 104, for example, the consensus building unit 114 transmits the block BL subjected to the mining process in the process in S13 to the other nodes 1 among the plurality of nodes 1, to make the contents of the block BL subjected to the mining process in the process in S13 identical among the plurality of nodes 1.

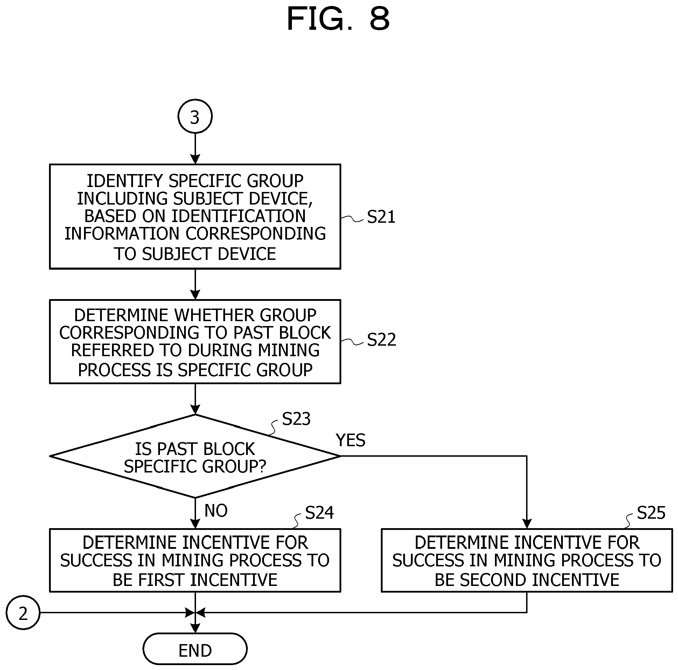

Subsequently, as illustrated in FIG. 8, the group identifying unit 115 identifies the specific group including the subject node 1 from among the plurality of groups including the respective nodes of the plurality of nodes 1, for example, based on the identification information corresponding to the subject node 1 (S21).

Specifically, the group identifying unit 115 refers to the group information 131 stored in the information storage area 130, for example, and identifies the specific group including the subject node 1, based on the identification information corresponding to the subject node 1. In the description below, a specific example of the group information 131 is explained.

### [Specific Example of the Group Information]

FIG. 11 is a table for explaining a specific example of the group information 131. The group information 131 is, for example, information including information indicating the correspondence relationship between the respective groups and the identification information about the respective nodes 1.

The group information 131 illustrated in FIG. 11 includes items that are, for example, "group identification information" in which the identification information corresponding to the respective groups is set, "node identification information" in which the identification information about the nodes 1 corresponding to the respective groups is set, and "block identification information" in which identification information about the past blocks BL corresponding to the respective groups is set.

Specifically, in the group information 131 illustrated in FIG. 11, for example, "1" is set as the "group identification information", "the last digit is 1" is set as the "node identification information", and "the last digit is 1" is set as the "block identification information" in the information in the first row.

Also, in the group information 131 illustrated in FIG. 11, for example, "2" is set as the "group identification information", "the last digit is 2" is set as the "node identification information", and "the last digit is 2" is set as the "block identification information" in the information in the second row.

Further, in the group information 131 illustrated in FIG. 11, for example, "3" is set as the "group identification information", "the last digit is 3" is set as the "node identification information", and "the last digit is 3" is set as the "block identification information" in the information in the third row. Explanation of the other information included in FIG. 11 is not made herein.

Therefore, in a case where the last digit of the identification information about the subject node 1 is °3", for example, the group identifying unit 115 identifies "3" as the identification information about the group (specific group) including the subject node 1 in the process in S21.

Referring back to FIG. 8, the reward determining unit 116 determines, for example, whether the group corresponding to the past block BL selected in the process in S13 among the plurality of groups is the specific group (S22).

Specifically, in the information in the second row of the group information 131 described with reference to FIG. 11, "2" is set as the "group identification information", and "the last digit is 2" is set as the "block identification information". Therefore, in a case where the last digit of the identification information about the past block BL selected in the process in S13 is "2", for example, the reward determining unit 116 identifies "2" as the identification information corresponding to the group corresponding to the past block BL selected in the process in S13. Accordingly, in this case, the reward determining unit 116 determines, for example, whether the identification information corresponding to the specific group identified in the process in S21 is "2".

In a case where it is determined, as a result, that the group corresponding to the past block BL selected in the process in S13 is a group other than the specific group (NO in S23), the reward determining unit 116 determines, for example, the incentive for the success in the mining process performed in the process in S13 to be the first incentive (S24).

Specifically, in this case, the reward determining unit 116 refers to the base reward information 132 stored in the information storage area 130, for example, and determines the first incentive for the success in the mining process performed in the process in S13. In the description below, a specific example of the base reward information 132 is explained.

### [Specific Example of the Base Reward Information]

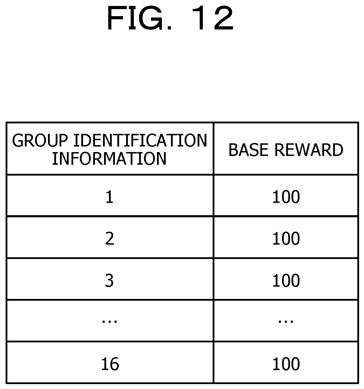

FIG. 12 is a table for explaining a specific example of the base reward information 132. The base reward information 132 is, for example, information including information indicating the first incentives.

For example, the base reward information 132 illustrated in FIG. 12 includes, as items, "group identification information" in which the identification information corresponding to the respective groups is set, and "base reward" in which the first incentives are set.

Specifically, in the base reward information 132 illustrated in FIG. 12, for example, "1" is set as the "group identification information", and "100" is set as the "base reward" in the information in the first row.

Also, in the base reward information 132 illustrated in FIG. 12, for example, "2" is set as the "group identification information", and "100" is set as the "base reward" in the information in the second row.

Further, in the base reward information 132 illustrated in FIG. 12, for example, "3" is set as the "group identification information", and "100" is set as the "base reward" in the information in the third row. Explanation of the other information included in FIG. 12 is not made herein.

Therefore, in a case where the last digit of the identification information about the subject node 1 is °3", for example, the reward determining unit 116 refers to the base reward information 132 illustrated in FIG. 12, and identifies "100" set as the "base reward" in the information (the information in the third row) in which "3" is set as the "group identification information", in the process in S24. In this case, the reward determining unit 116 then determines the identified "100" as the first incentive, for example.

Referring back to FIG. 8, if the group corresponding to the past block BL selected in the process in S13 is determined to be the specific group (Yes in S23), the reward determining unit 116 determines, for example, the incentive for the success in the mining process performed in the process in S13 to be the second incentive calculated by adding the first incentive and an additional incentive (S25). In the description below, details of the process in S25 are explained.

### [Details of the Process in S25]

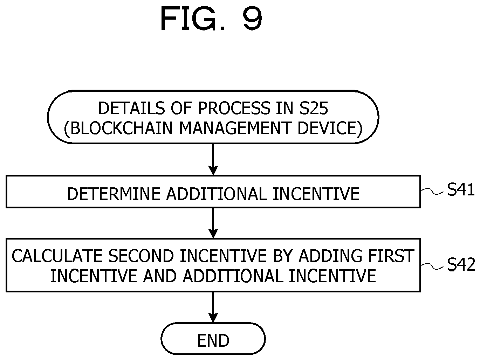

FIG. 9 is a flowchart for explaining details of the process in S25.

As illustrated in FIG. 9, the reward determining unit 116 determines, for example, an additional incentive for the success in the mining process performed in the process in S13 (S41).

Specifically, the reward determining unit 116 refers to the additional reward information 133 stored in the information storage area 130, for example, and determines the additional incentive for the success in the mining process performed in the process in S13. In the description below, specific examples of the additional reward information 133 are explained.

### [Specific Examples of the Additional Reward Information]

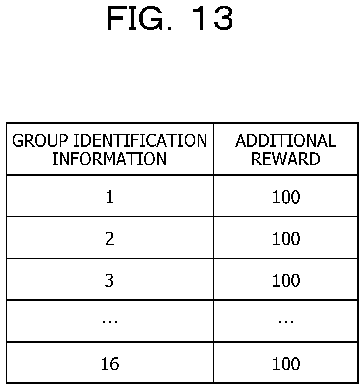

FIGs. 13 to 16 are tables for explaining specific examples of the additional reward information 133. The additional reward information 133 is, for example, information including information indicating additional incentives.

For example, the additional reward information 133 illustrated in FIG. 13 and others includes, as items, "group identification information" in which the identification information corresponding to the respective groups is set, and "additional reward" in which the additional incentives are set.

Specifically, in the additional reward information 133 illustrated in FIG. 13, for example, "1" is set as the "group identification information", and "100" is set as the "additional reward" in the information in the first row.

Also, in the additional reward information 133 illustrated in FIG. 13, for example, "2" is set as the "group identification information", and "100" is set as the "additional reward" in the information in the second row.

Further, in the additional reward information 133 illustrated in FIG. 13, for example, "3" is set as the "group identification information", and "100" is set as the "additional reward" in the information in the third row. Explanation of the other information included in FIG. 13 is not made herein.

Therefore, in a case where the last digit of the identification information about the subject node 1 is °3", for example, the reward determining unit 116 refers to the additional reward information 133 illustrated in FIG. 13, and identifies "100" set as the "additional reward" in the information (the information in the third row) in which "3" is set as the "group identification information", in the process in S41. In this case, the reward determining unit 116 then determines the identified "100" as the additional incentive, for example.

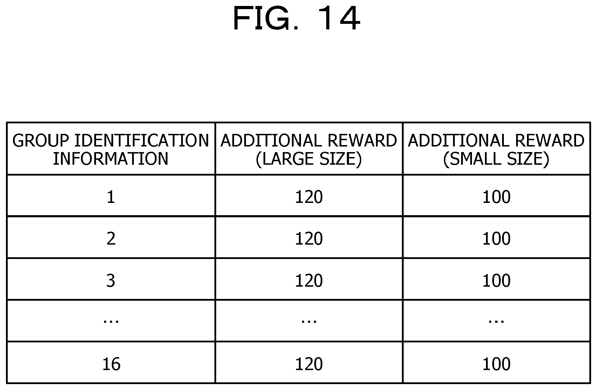

Note that, as illustrated in FIG. 14, instead of the item of the "additional reward" described above, or in addition to the item of the "additional reward" described above, for example, the additional reward information 133 may include, as items, "additional reward (large size)" in which the additional incentives in cases where the size of the past block BL selected in the process in S13 is equal to or larger than a threshold value (hereinafter also referred to simply as the threshold) are set, and "additional reward (small size)" in which the additional incentives in cases where the size of the past block BL selected in the process in S13 is smaller than the threshold are set.

Specifically, in the additional reward information 133 illustrated in FIG. 14, "1" is set as the "group identification information", "120" is set as the "additional reward (large size)", and "100" is set as the "additional reward (small size)", for example, in the information in the first row.

Also, in the additional reward information 133 illustrated in FIG. 14, "2" is set as the "group identification information", "120" is set as the "additional reward (large size)", and "100" is set as the "additional reward (small size)", for example, in the information in the second row.

Further, in the additional reward information 133 illustrated in FIG. 14, "3" is set as the "group identification information", "120" is set as the "additional reward (large size)", and "100" is set as the "additional reward (small size)", for example, in the information in the third row. Explanation of the other information included in FIG. 14 is not made herein.

Therefore, in a case where the last digit of the identification information about the subject node 1 is °3", and the size of the past block BL selected in the process in S13 is equal to or larger than the threshold, for example, the reward determining unit 116 may refer to the additional reward information 133 illustrated in FIG. 14, and identify "120" set as the "additional reward (large size)" in the information (the information in the third row) in which "3" is set as the "group identification information", in the process in S41. In this case, the reward determining unit 116 may then determine the identified "120" as the additional incentive, for example.

In other words, in a case where some past blocks BL are to be deleted from the storage devices 104 corresponding to the respective nodes 1, for example, there is a high possibility that the past blocks BL are deleted in descending order of size in the respective nodes 1. Therefore, in a node 1 according to this embodiment, for example, the additional incentive may be increased in proportion to the size of the past block BL selected in the process in S13.

With this arrangement, in the information processing system 10 according to this embodiment, for example, even for large-sized past blocks BL, the respective nodes 1 can be made to hold the past blocks BL corresponding to the same groups as the respective nodes 1 as long as possible. Thus, the information processing system 10 according to this embodiment can further reduce the appearance of past blocks to be deleted from all the nodes 1, for example.

Note that, although the example illustrated in FIG. 14 concerns a case where one of the two types of additional rewards is adopted depending on the size of the past block BL, the embodiment is not limited thereto. Specifically, in the information processing system 10, for example, any of three or more types of additional rewards may be adopted depending on the size of the past block BL.

Referring back to FIG. 9, the reward determining unit 116 calculates the second incentive, for example, by adding the first incentive for the success in the mining process performed in the process in S13 and the additional incentive determined in the process in S41 (S42).

Specifically, for example, in a case where the first incentive for the success in the mining process performed in the process in S13 is "100", and the additional incentive determined in the process in S41 is "100", the reward determining unit 116 calculates "200" as the second incentive.

Referring back to FIG. 8, the blockchain management device 1 ends the blockchain management process after the process in S24 or the process in S25.

Note that, in the process in S14, for example, if the mining process on the block BL in the process in S13 has not been successfully performed (NO in S14), the blockchain management device 1 also ends the blockchain management process.

### [Incentive Change Process]

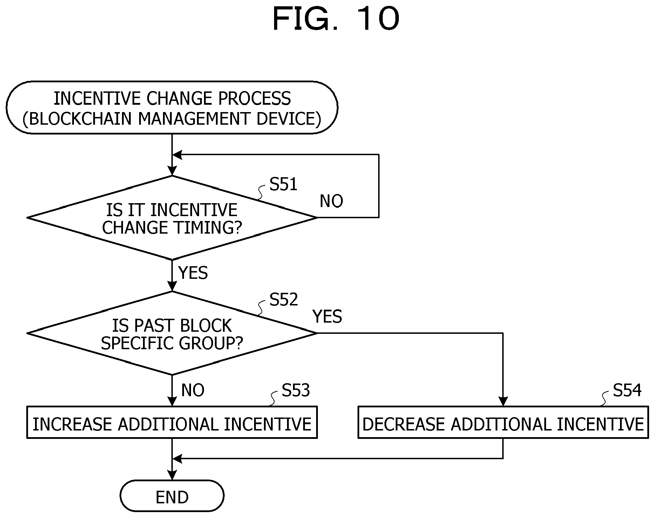

Next, a process of changing the additional incentive in the blockchain management process (this process will be hereinafter also referred to as the incentive change process) is described. FIG. 10 is a flowchart for explaining the incentive change process.

As illustrated in FIG. 10, for example, the reward determining unit 116 stands by until an incentive change timing comes (NO in S51). The incentive change timing may be, for example, a timing after the main process of the blockchain management process is performed. Alternatively, the incentive change timing may be, for example, a timing after the main process of the blockchain management process is performed a predetermined number of times.

In other words, the incentive change process may be performed every time the main process of the blockchain management process is performed, for example, or may be performed every time the main process of the blockchain management process is performed a predetermined number of times.

If the incentive change timing has come (YES in S51), the reward determining unit 116 then determines, for example, whether the group corresponding to the past block BL selected in the process in S13 is a group other than the specific group (S52).

If it is determined, as a result, that the group corresponding to the past block BL selected in the process in S13 is a group other than the specific group (NO in S52), for example, the reward determining unit 116 changes the additional incentive so as to increase the additional incentive (S53).

Specifically, in this case, when the process in S13 with the same combination as the combination of the group of the mining success node 1 and the group of the past block BL in the process in S13 of the current time is again performed, for example, the reward determining unit 116 performs control so that a larger additional incentive than in the process in S13 of the current time is given to the mining success node 1.

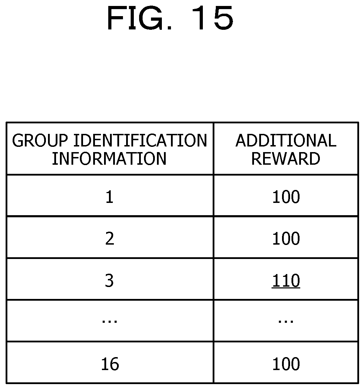

More specifically, in a case where the identification information about the group corresponding to the past block BL selected in the process in S13 is "2", and the identification information corresponding to the specific group identified in the process in S21 is °3", for example, the reward determining unit 116 determines that the group corresponding to the past block BL selected in the process in S13 is a group other than the specific group. Therefore, in this case, the reward determining unit 116 updates the "additional reward" in the information (the information in the third row) having "3" set as the "group identification information" from "100" to "110", for example, as indicated by the underlined portion in FIG. 15.

In other words, in a case where there is a node 1 (hereinafter also referred to as the first node 1) that holds not only the past block BL corresponding to the group including the subject node 1 (this past block BL will be hereinafter also referred to as the first group) but also the past block BL corresponding to another group (this past block BL will be hereinafter also referred to as the second group) different from the first group, the first node 1 can perform (participate in) not only the mining process during which the past block BL corresponding to the first group is referred to, but also the mining process during which the past block BL corresponding to the second group is referred to, for example. Therefore, in this case, the success probability of the mining process in which the past block BL corresponding to the second group is selected drops, for example, and, at the node 1 included in the second group (this node 1 will be hereinafter also referred to as the second node 1), the motivation to hold the past block BL corresponding to the second group drops.

In view of this, in a case where the group including the mining success node 1 is different from the group corresponding to the past block BL selected in the mining process, for example, the information processing system 10 according to this embodiment makes the additional incentive larger when the node 1 included in the group corresponding to the past block BL selected in the mining process has succeeded in the mining process. In other words, in a case where the mining success node 1 is not included in the group corresponding to the past block BL selected in the mining process, for example, the information processing system 10 makes the first incentive larger when the node 1 included in the group corresponding to the past block BL selected in the mining process has succeeded in the mining process.

With this arrangement, even in a case where the mining success node 1 is not included in the group corresponding to the past block BL selected in the mining process, for example, the information processing system 10 according to this embodiment can reduce the decrease in motivation for the node 1 included in the group corresponding to the past block BL selected in the mining process to keep holding the past block BL corresponding to the same group. Thus, the information processing system 10 according to this embodiment can further reduce the appearance of past blocks to be deleted from all the nodes 1, for example.

If it is determined that the group corresponding to the past block BL selected in the process in S13 is the specific group (YES in S52), on the other hand, the reward determining unit 116 changes the additional incentive so as to reduce the additional incentive (S54).

Specifically, in this case, in a case where the process in S13 with the same combination as the combination of the group corresponding to the mining success node 1 and the group corresponding to the past block BL in the process in S13 of the current time is again performed, for example, the reward determining unit 116 performs control so that a smaller additional incentive than in the process in S13 of the current time is given to the mining success node 1.

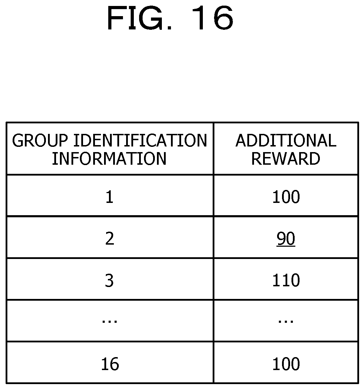

More specifically, in a case where the identification information about the group corresponding to the past block BL selected in the process in S13 is "2", and the identification information corresponding to the specific group identified in the process in S21 is "2", for example, the reward determining unit 116 determines that the group corresponding to the past block BL selected in the process in S13 is the specific group. Therefore, in this case, the reward determining unit 116 updates the "additional reward" in the information (the information in the second row) having "2" set as the "group identification information" from "100" to "90", for example, as indicated by the underlined portion in FIG. 16.

In other words, in a case where there is a group in which the additional incentive has been increased by the process performed in S53, for example, there might be a node 1 moving relative to the group in which the additional incentive has been increased (in other words, the node 1 changes groups to which it belongs).

In view of this, in a case where the group including the mining success node 1 (the specific group) is the same as the group corresponding to the past block BL selected in the mining process, for example, the information processing system 10 according to this embodiment makes the additional incentive smaller when the node 1 included in the group corresponding to the past block BL selected in the mining process has succeeded in the mining process. In other words, in a case where the mining success node 1 is included in the group corresponding to the past block BL selected in the mining process, for example, the information processing system 10 makes the additional incentive smaller when the node 1 included in the group corresponding to the past block BL selected in the mining process has succeeded in the mining process.

With this arrangement, the information processing system 10 according to this embodiment can reduce the increase in the number of groups in which the additional incentives become larger than those in other groups due to the process performed in S53, for example, and can reduce the appearance of nodes 1 moving relative to a group in which the additional incentive has been increased. Thus, even in a case where the process in S53 is performed, for example, the information processing system 10 can equalize the numbers of nodes 1 included in the respective groups, and further reduce the appearance of past blocks BL to be deleted from all the nodes 1.

As described above, in the mining process to generate a block BL from a newly generated transaction and store the block BL as part of the ledger, for example, a mining success node 1 according to this embodiment identifies the specific group including the subject node 1 from a plurality of groups including the respective nodes of a plurality of nodes 1 holding the ledger, based on the identification information corresponding to the subject node 1.

The mining success node 1 then determines, for example, whether the group corresponding to the past block BL selected when the mining process was performed among the plurality of groups is the specific group.

In a case where it is determined, as a result, that the group corresponding to the past block BL is a group other than the specific group, the mining success node 1 determines, for example, the incentive for the success in the mining process to be the first incentive.

In a case where the group corresponding to the past block BL is determined to be the specific group, on the other hand, the mining success node 1 determines, for example, the incentive for the success in the mining process to be the second incentive calculated by adding the first incentive and an additional incentive.

In other words, in the information processing system 10 according to this embodiment, in a case where the group corresponding to the past block BL used during the mining process is the specific group, for example, the incentive for the success in the mining process is made larger than in a case where the group corresponding to the past block BL used during the mining process is a group other than the specific group.

With this arrangement, in the information processing system 10 according to this embodiment, for example, the respective nodes of the plurality of nodes 1 can be made to hold the past blocks BL corresponding to the same groups as the respective nodes 1 as long as possible. In other words, by grouping the plurality of nodes 1 so that all the past blocks BL are associated with one of the groups, for example, the information processing system 10 may create a situation in which all the past blocks BL can be preferentially held in the nodes 1 corresponding to one of the groups. Thus, the information processing system 10 may reduce the appearance of past blocks BL to be deleted from all the nodes 1, for example.

## Claims

1. A blockchain management program for causing a computer to execute a process comprising:
identifying a specific group that includes a subject device among a plurality of groups that each includes a plurality of devices that holds a ledger, based on identification information that corresponds to the subject device, in a mining process to generate a block from a newly generated transaction and store the block as part of the ledger;
determining whether a group that corresponds to a past block selected during the mining process is the specific group; and
determining an incentive for success in the mining process to be a first incentive when the group that corresponds to the past block is determined to be a group other than the specific group, and determining an incentive for success in the mining process to be a second incentive that is a sum of the first incentive and an additional incentive when the group that corresponds to the past block is determined to be the specific group.

2. The blockchain management program according to claim 1, wherein the process further comprises
increasing the second incentive, when the group that corresponds to the past block is determined to be a group other than the specific group.

3. The blockchain management program according to claim 1, wherein the process further comprises
decreasing the second incentive, when the group that corresponds to the past block is determined to be the specific group.

4. The blockchain management program according to claim 1, wherein
the determining the incentive for success in the mining process includes:
identifying a size of the past block; and
determining the additional incentive in accordance with the identified size.

5. A blockchain management device comprising:
a group identifying unit configured to identify a specific group that includes a subject device among a plurality of groups that each includes a plurality of devices that holds a ledger, based on identification information that corresponds to the subject device, in a mining process to generate a block from a newly generated transaction and store the block as part of the ledger; and
a reward determining unit configured to determine whether a group that corresponds to a past block selected during the mining process is the specific group; and determine an incentive for success in the mining process to be a first incentive when the group that corresponds to the past block is determined to be a group other than the specific group, and determining an incentive for success in the mining process to be a second incentive that is a sum of the first incentive and an additional incentive when the group that corresponds to the past block is determined to be the specific group.

6. The blockchain management device according to claim 5, wherein the reward determining unit
increases the second incentive, when the group that corresponds to the past block is determined to be a group other than the specific group.

7. The blockchain management device according to claim 5, wherein the reward determining unit
decreases the second incentive, when the group that corresponds to the past block is determined to be the specific group.

8. A blockchain management method comprising:
identifying a specific group that includes a subject device among a plurality of groups that each includes a plurality of devices that holds a ledger, based on identification information that corresponds to the subject device, in a mining process to generate a block from a newly generated transaction and store the block as part of the ledger;
determining whether a group that corresponds to a past block selected during the mining process is the specific group; and
determining an incentive for success in the mining process to be a first incentive when the group that corresponds to the past block is determined to be a group other than the specific group, and determining an incentive for success in the mining process to be a second incentive that is a sum of the first incentive and an additional incentive when the group that corresponds to the past block is determined to be the specific group.

9. The blockchain management method according to claim 8, further comprises
decreasing the second incentive, when the group that corresponds to the past block is determined to be the specific group.

10. The blockchain management method according to claim 8, wherein
the determining the incentive for success in the mining process includes:
identifying a size of the past block; and
determining the additional incentive in accordance with the identified size.
